# FASCICULE DE BREVET EUROPEEN

(11) **EP 1 121 331 B1**
(45) Date de publication et mention de la délivrance du brevet: **28.07.2004**
(21) Numéro de dépôt: 99946260.9
(22) Date de dépôt: 29.09.1999
(51) Int. Cl.: C02F 3/34, B09C 1/10, A62D 3/00

(54) **PROCEDE MICROBIOLOGIQUE D'ELIMINATION D'UN COMPOSE NITROAROMATIQUE**
VERFAHREN ZUM MIKROBIOLOGISCHEN ABBAU EINER NITRO-AROMATISCHEN VERBINDUNG
MICROBIOLOGICAL METHOD FOR ELIMINATING A NITROAROMATIC COMPOUND

(30) Priorité: 30.09.1998 FR 9812237
(43) Date de publication de la demande: 08.08.2001
(73) Titulaire: Commissariat à l'Energie Atomique, 75752 Paris Cedex 15 (FR); Centre National de la Recherche Scientifique (CNRS), 75794 Paris Cédex 16 (FR)
(72) Inventeur: OUAZZANI, Jamal, F-91300 Massy (FR); LE CAMPION, Laurence, F-13005 Marseille (FR)
(74) Mandataire: Audier, Philippe André
(86) Numéro de dépôt international: PCT/FR1999/002314
(87) Numéro de publication internationale: WO 2000/018693

(56) Documents cités:
- EP-A- 0 499 441
- DE-A- 19 707 883
- CRUZ J E, BAYMAN P: "TNT degradation by funghi isolated from explosives-contaminated soil" ABSTRACTS OF THE GENERAL MEETING (1992), 1992, page 359 XP002107390 Tulane University, New Orleans, LA 70118, USA
- HOFRICHTER M, SCHEIBNER K, FRITSCHE W: "The role of soil funghi in contaminant degradation - Rolle der Bodenpilze beim Fremdstoffabbau" TERRATECH, vol. 4, no. 3, 1995, pages 69-71, XP002107391
- BENNET J W, HOLLRAH P, WATERHOUSE A, HORVATH K: "Isolation of Bacteria and Funghi form TNT-contaminated Composts and Preparation of 14C-ring Labeled TNT" INTERNATIONAL BIODETERIORATION & BIODEGRADATION, vol. 35, no. 4, 1995, pages 421-430, XP002107392

## Description

### Domaine technique

La présente invention se rapporte à un procédé microbiologique d'élimination d'un composé nitroaromatique présent dans une solution ou dans un sol, et à une souche de micro-organisme capable de minéraliser ledit composé nitroaromatique.

Le procédé de l'invention est par exemple très utile pour traiter une solution, telle que par exemple un effluent industriel, ou un sol, pollué par un composé nitroaromatique, par exemple par du dinitrotoluène (DNT) ou du trinitrotoluène (TNT).

### Art antérieur

Différentes voies de dégradation de composés nitroaromatiques ont été explorées dans l'art antérieur. Ces voies sont essentiellement soit biologiques, soit chimiques.

Par exemple, en 1998, KALAFUT et al. ont étudié la transformation du TNT par trois bactéries aérobies : *Pseudomonas aeruginosa*, *Bacillus* sp. et *Staphylococcus* sp.. Il a montré que ces trois souches transformaient le TNT mais ne pouvaient pas l'utiliser comme seule source ni de carbone ni d'azote. L'étude est rapportée dans le document KALAFUT, T. et al., "Biotransformation patterns of 2,4,6-trinitrotoluène by aerobie bacteria", Cur. Microbiol., 1998, 36, 45-54.

En 1998, BOOPATHY et al. ont mis au point un bioréacteur aérobie/anoxie à l'échelle du laboratoire pour la décontamination d'un sol contaminé par le TNT. Ce procédé peut être réalisé en système "batch" ou en semi-continu. Le traitement en batch permet une transformation du TNT, mais certains métabolites s'accumulent. Par contre, en semi-continu (changement de 10% de sol régulièrement), la dégradation du TNT (8 g/kg de sol) est complète. Le bilan, après 14 jours d'incubation, indique que seulement 23% du TNT ont été minéralisés, 27% assimilés, et 8% se retrouvent adsorbés sur le sol. Le pourcentage restant correspond à la formation de métabolites tels que les amino-dinitrotoluènes (4%), le 2,4-diamino-6-nitrotoluène (3%) et le 2,3-butanediol issus du clivage du cycle (30%). Des additions successives de sol une, deux ou trois fois par semaine n'affectent pas la vitesse de dégradation du TNT. De plus, ce réacteur permet un maintien de la population bactérienne, avec comme seul co-substrat nécessaire, 0,3% de mélasse. En utilisant le même procédé, il est possible d'éliminer d'autres contaminants du sol, tels que l'hexahydro-1,3,5-trinitro-1,3,4-triazine (RDX), l'octahydro-1,3,5,7-tétranitro-1,3,5,7-tétrazocine (HMX), le trinitrotoluène et le 2,4-dinitrotoluène. Ces résultats sont rapportés dans BOOFATHY, R. et al. "A laboratory study of the bioremediation of 2,4,6-trinitrotoluene-contaminated soil using aerobic/anoxic soil slurry reactor", Water Environment Research, 1998.

En 1998, VORBECK et al. ont étudié la réduction microbiologique des groupements nitro du TNT et l'hydrogénation microbiologique du cycle aromatique. En raison de la déficience en électrons due à la présence des groupements nitro attracteurs d'électrons, la première transformation microbienne du TNT est une nitro-réduction. L'hydrogénation du cycle aromatique décrite pour l'acide picrique, reste minoritaire. Deux bactéries ont été isolées d'un milieu aérobie, enrichi en TNT comme seule source d'azote : la souche TNT-8 (gram-) et la souche TNT-32 (gram+). Elles catalysent la nitro-réduction du TNT. Par contre, les souches *Rhodococcus erythropolis* HL PM-1 (croissant sur l'acide picrique) et *Mycobacterium* sp. HL 4-NT-1 (croissant sur le 4-nitrotoluène) possèdent des systèmes enzymatiques qui catalysent l'hydrogénation du TNT, et par conséquent l'addition d'un ion hydrure sur le cycle aromatique. Le complexe hydrure-Meisenheimer du TNT (H--TNT) ainsi formé est alors converti en un métabolite jaune non dégradable, identifié par RMN. Dans ce cas, aucune dénitration réductive du TNT n'a été observé. La minéralisation du TNT n'a pas été étudiée. Ces résultats sont rapportés dans VORBECK, C. et al., "Initial Reductive reactions in aerobic microbial metabolism of 2,4,6-trinitrotoluène", Appl. Environ. Microbiol., 1998, 64(1), 246-252.

Mais aucun des micro-organismes décrits dans ces documents ne permet une minéralisation totale ou quasi-totale du TNT.

Les voies chimiques de dégradation présentent quant à elles de nombreux inconvénients liés à l'utilisation de réactifs chimiques. Ces inconvénients sont notamment le coût des réactifs chimiques et la pollution engendrée par ces réactifs dans les solutions et les sols traités.

Le document Ofrichter M., Scheibner K., Fritsche W. : "The role of soil funghi in contaminant degradation - Rolle der Bodenpilze beim Fremdstoffabbau" Terratech, vol. 4, n°3, 1995, pages 69-71 décrit un procédé microbiologique de traitement des terrains pollués. Dans ce procédé, des substances organiques telles que les nitrotoluènes sont éliminées avec des champignons du genre Penicillium en présence de sucre. Une très faible minéralisation du 2,4,6-TNT a été observée, inférieure à 0,5%, après quatre semaines.

Les documents Bennet J.W., Hollrah P., Waterhouse A, Horvath K : "Isolation of Bacteria and Funghi form TNT-contaminated Composts and Preparation of 14C-ring Labeled TNT" International Biodeterioration & Biodegradation, vol. 35 n°4, 1995, pages 421-430 et DE 19707883 A (Industrieanlagen Betriebsges), 3 septembre 1998 décrivent un procédé de décontamination biologique de terrains et eaux pollués, dont l'élimination des substances nocives, composés nitroaromatiques, en produits finaux inertes a lieu par des microorganismes, du genre Penicillium.

### Exposé de l'invention

La présente invention a précisément pour but de fournir un procédé qui permet une élimination totale ou quasi-totale d'un composé nitroaromatique dans une solution ou dans un sol, par minéralisation dudit composé.

Ainsi, le procédé de la présente invention est un procédé qui peut être utilisé pour traiter une solution ou un sol contenant un ou des composé(s) nitroaromatique(s) indésirable(s) car polluant(s).

Le procédé de l'invention est un procédé selon la revendication 1.

Par "le composé nitroaromatique" ou par "solution de composé nitroaromatique", il faudra comprendre ci-après "le ou les composé(s) nitroaromatique(s)" et "solution du ou des composé(s) nitroaromatique(s)" respectivement.

Selon l'invention, la solution de composé nitroaromatique peut être par exemple une solution de laboratoire, un effluent industriel, ou une eau de ruissellement, contenant un ou plusieurs composé(s) nitroaromatique(s) et, dans laquelle, ou dans lequel, de préférence, la souche de Penicillium peut métaboliser le composé nitroaromatique. Avantageusement, selon le procédé de l'invention, cette solution est une solution aqueuse.

Selon l'invention, le, au moins un, composé nitroaromatique peut être un composé comprenant au moins un cycle aromatique comportant au moins un groupe nitro, et éventuellement au moins une fonction choisie dans le groupe comprenant -OH, -COOH, un halogène, -NH₂, un ose cyclique ou linéaire, un alkyle linéaire ou ramifié comprenant de 1 à 12 atomes de carbone ou un aryle, non substitués ou substitués, par au moins une fonction choisie dans le groupe comprenant -OH, -COOH, un halogène, -NH₂, -OH.

Par exemple, le, au moins un, composé nitroaromatique peut être un composé choisi parmi du nitrotoluène, du dinitrotoluène, du trinitrotoluène, et leurs dérivés, ou un mélange de ces composés.

Selon l'invention, le procédé de la présente invention peut comprendre en outre, avant l'étape de mise en contact, une étape de neutralisation du pH de la solution de composé nitroaromatique ou du sol de manière à ce que la mise en contact avec la biomasse, par exemple une souche de Penicillium, puisse être effectuée à un pH de 4,5 à 6,5.

Selon l'invention, la mise en contact peut par exemple être effectuée en présence de glucose à une concentration de 0,5 à 50 g de glucose/l de ladite solution.

Selon l'invention, la souche de Penicillium est la souche de Penicillium sp. LCM déposée sous le numéro I-2081 à la Collection Nationale de Cultures de Microorganismes (CNCM) tenue par l'Institut Pasteur en France. Aussi, l'invention se rapporte également à la souche de Pénicillium sp. LCM déposée sous le numéro I-2081 à la CNCM tenue par l'Institut Pasteur en France.

Selon l'invention, la biomasse de la souche de Penicillium peut être obtenue à partir des procédés classiques de la microbiologie pour former une biomasse, par exemple par culture du Penicillium dans un milieu de culture de préférence riche, solide ou liquide, de préférence liquide, à une température et à un pH adéquats pour permettre un métabolisme optimal de la souche de Penicillium.

Un milieu de culture utilisable pour développer la biomasse, est donné dans les exemples ci-dessous.

Lorsqu'une quantité suffisante de biomasse est obtenue, et lorsque le milieu de culture est liquide, cette biomasse peut par exemple être récupérée par filtration ou par centrifugation, avantageusement par filtration.

De préférence, dans le procédé conforme à la présente invention, la biomasse est utilisée fraîche, ce qui n'exclut pas toute autre utilisation.

La biomasse mise en contact avec la solution ou le sol doit être en quantité suffisante pour permettre la minéralisation dudit composé nitroaromatique. La quantité de biomasse peut être déterminée par exemple en fonction de la quantité de composés nitroaromatiques à minéraliser ou de la vitesse de minéralisation souhaitée. Cette quantité de biomasse peut par exemple être déterminée à partir d'échantillons de la solution de composé nitroaromatique mélangés à des quantités variables de biomasse, à une température et à un pH adéquats pour permettre un métabolisme de préférence optimal de la souche de Penicillium.

Selon l'invention, la mise en contact peut être réalisée soit par mélange de la biomasse et de la solution du composé nitroaromatique, soit par passage de ladite solution à travers la biomasse, ladite biomasse étant retenue dans, ou sur, un support de manière à pouvoir être traversée par ladite solution, pour permettre la minéralisation du composé nitroaromatique qu'elle contient.

Lorsque la mise en contact est réalisée par mélange de la biomasse avec la solution du composé nitroaromatique, cette mise en contact peut être réalisée par exemple dans un réacteur classique tel qu'un fermenteur, comprenant par exemple notamment un dispositif de brassage ou mélange de la solution et de la biomasse et un dispositif de chauffage. Ce type de mise en contact est utile par exemple pour un système semi-continu, ou système "batch", de traitement d'une solution de composé nitroaromatique utilisant le procédé de la présente invention.

Lorsque la mise en contact est réalisée par passage de la solution de composé nitroaromatique à travers la biomasse, la biomasse peut être retenue dans, ou sur, un support. En effet, avantageusement, le Penicillium en culture forme des agrégats ou pelotes ("pelets" en anglais), ce qui permet de le séparer facilement d'une solution, par exemple par filtration.

Selon l'invention, le support peut être par exemple une colonne ou un réacteur classique permettant un passage en continu de la solution du composé nitroaromatique à travers la biomasse, sans entraîner cette dernière. La biomasse peut être retenue par exemple au moyen d'une grille, d'un tissu, ou d'une maille de fibres organiques ou inorganiques qui laisse passer la solution, mais pas la biomasse. Cette colonne ou ce réacteur peut également comprendre un dispositif de brassage de la solution et de la biomasse, et un dispositif de chauffage. Ce type de mise en contact est utile par exemple pour un système de traitement en continu d'une solution d'un composé nitroaromatique utilisant le procédé de la présente invention.

Lorsque la solution à traiter est une eau de ruissellement, cette mise en contact peut être effectuée par simple dispersion de la biomasse de la souche de Penicillium dans l'eau de ruissellement.

Selon l'invention, lors de la mise en contact avec une solution de composé nitroaromatique, la biomasse peut être mélangée à la solution dudit composé au moyen d'un agitateur classique, par exemple un agitateur rotatif, et à une vitesse d'agitation adéquate, par exemple de 50 à 250 rpm. L'agitation peut être maintenue pendant toute la durée de mise en contact entre la biomasse de Penicillium et la solution du composé nitroaromatique de manière à optimiser cette mise en contact.

Selon l'invention, l'étape de mise en contact est effectuée dans des conditions adéquates pour une minéralisation du (des) composé(s) nitroaromatique(s) par la souche de Penicillium. Des essais classiques préalables de croissance de Penicillium sur des échantillons de la solution du composé nitroaromatique à différentes température, les autres paramètres, par exemple le pH, étant constants permettent de déterminer cette température permissive. Il est à noter que Penicillium peut se développer même à une température d'environ 4°C. Ainsi, le procédé de la présente invention présente notamment l'avantage d'être utilisable dans une large gamme de température.

Cette température permissive peut être par exemple d'environ 10 à 35°C, par exemple de 15 à 35°C. Les inventeurs ont noté une bonne minéralisation à une température de 20 à 30°C, en particulier à une température de 25 à 28°C. Avantageusement, la température peut être maintenue sensiblement constante au cours de la mise en contact de manière à optimiser la minéralisation.

Selon l'invention, l'étape de mise en contact est de préférence effectuée à un pH permissif pour le métabolisme de la souche de Penicillium. Des essais tels que ceux précités mais à température constante et à différents pH peuvent être réalisés pour déterminer ce pH permissif. Généralement, ce pH peut être de 5 à 7,5, par exemple de 5 à 6, par exemple d'environ 5,5.

Le pH de la solution varie bien entendu au cours du procédé de l'invention car des groupes nitro du composé nitroaromatique peuvent être réduits lors de la minéralisation de ce dernier. Cette variation du pH n'est pas gênante pour le procédé de la présente invention.

Cependant, selon une variante de la présente invention, le pH de la solution peut être maintenu sensiblement constant au cours de l'étape de mise en contact, aux valeurs précitées, au moyen d'un tampon classique tel qu'un tampon phosphate ou citrate. Ce tampon peut être ajouté au sol ou à la solution avant ou pendant l'étape de mise en contact du procédé conforme à la présente invention.

Selon l'invention, la mise en contact peut être effectuée en présence d'une source de carbone pour la souche de Penicillium. Cette source de carbone est un inducteur du métabolisme général de Penicillium, et il favorise la minéralisation du composé nitroaromatique par ce micro-organisme. Cette source de carbone peut être ajoutée en une quantité suffisante pour optimiser le métabolisme de Penicillium, en particulier la minéralisation du composé nitroaromatique. Cette source de carbone peut être par exemple choisie dans le groupe comprenant du glucose, des polymères de glucose, de la mélasse, des hydrolysats de maïs, etc... Les polymères de glucose comprennent par exemple l'amidon. La source de carbone peut être ajoutée par exemple à la solution à traiter dans le réacteur, ou lorsqu'il s'agit d'une eau de ruissellement, ou d'un sol, directement dans ladite eau ou sur ledit sol.

Dans un système de traitement d'une solution en continu, le réacteur peut comporter en outre un dispositif d'alimentation du réacteur en source de carbone.

Selon l'invention, lorsque la source de carbone est du glucose, et que la solution du composé nitroaromatique est une solution saturée de ce composé par exemple une solution saturée de TNT, de DNT, d'un dérivé de ceux-ci ou d'un mélange de ceux-ci ou de leurs dérivés, la concentration du glucose lors de la mise en contact, dans la solution, peut être avantageusement de 2 à 25 g/l, par exemple de 15 g/l.

Une concentration optimale de la source de carbone peut être déterminée par exemple par des essais du procédé de l'invention, sur des échantillons de la solution du composé nitroaromatique tels que ceux précités.

Selon l'invention, les conditions adéquates énoncées précédemment peuvent également comprendre l'adjonction d'additifs régulateurs ou inducteurs du métabolisme de Penicillium dans la solution ou sur le sol à traiter, tels que du sulfate de magnésium, du nitrate de sodium, du chlorure de potassium, du sulfate de fer, etc..., des oligo-éléments, et de manière générale tout additif connu favorisant le métabolisme de Penicillium.

Avantageusement, selon le procédé de l'invention, la mise en contact est réalisée de telle manière qu'il y a un contact optimum entre Penicillium et la solution et se fera de préférence sous agitation lorsqu'elle est réalisée dans un réacteur.

Un excès de biomasse de Penicillium peut entraîner la formation d'un agrégat, ou "gâteau", qui peut nuire à un contact optimum entre le micro-organisme et la solution.

Avantageusement, selon la présente invention, la biomasse de Penicillium est mise en contact avec la solution du composé nitroaromatique à une concentration de 50 à 800 g en poids frais de biomasse par litre de solution dudit composé, par exemple environ 150 g/l.

Lorsque le procédé de la présente invention se rapporte à un procédé d'élimination d'un composé nitroaromatique présent dans un sol les conditions adéquates pour une minéralisation du, au moins un, composé nitroaromatique présent dans ledit sol par la souche de Penicillium sont bien entendu les conditions favorables au métabolisme de la souche de Penicillium pour minéraliser le composé nitroaromatique à éliminer. Ces conditions sont notamment celles précédemment décrites.

Il est à noter de plus que la souche de Penicillium se développe mieux en milieu humide.

Aussi, avantageusement, ce procédé de l'invention peut comprendre en outre, avant, pendant ou après l'étape de mise en contact du sol à traiter avec la biomasse, une étape d'inondation dudit sol avec une solution aqueuse, de manière à former une solution du composé nitroaromatique.

Le procédé de minéralisation d'un composé nitroaromatique en solution conforme à l'invention et tel qu'il est précédemment décrit peut alors être appliqué.

L'homme du métier comprendra aisément que l'humidification du sol peut être naturelle, notamment par les eaux de pluies. Dans ce cas, l'étape d'inondation dudit sol avec une solution aqueuse se fera naturellement avec l'eau d'une pluie.

Selon l'invention, la mise en contact du sol, ou de la solution formée par inondation du sol, peut être effectuée par dispersion d'une souche de Penicillium sur le sol à traiter, avantageusement d'une biomasse de la souche de Penicillium, avant ou après l'inondation dudit sol. Le sol peut bien entendu être inondé avec une solution aqueuse contenant la biomasse de Penicillium.

Une source de carbone, un tampon de pH et un additif tels que ceux précités peuvent également être dispersés sur le sol avant ou lors de la mise en contact avec la souche de Penicillium.

Le procédé de l'invention est très avantageux par rapport aux procédés de l'art antérieur. En effet, les inventeurs ont notamment montré que la souche de Penicillium permet de minéraliser aisément plus de 75% d'un composé aromatique tel que ceux précités, par exemple du TNT, du DNT et leurs dérivés, alors que les procédés microbiologiques de l'art antérieur dépassent rarement les 10% de minéralisation de ces composés. Cette minéralisation correspond à une dégradation, ou biodégradation, totale ou quasi-totale du composé nitroaromatique.

De plus, de manière inattendue, le procédé de l'invention permet de traiter une solution avec les résultats ci-dessus même lorsqu'elle est saturée en composé nitroaromatique, c'est-à-dire qu'elle contient environ 100 mg/l, et jusqu'à 120 mg/l, de composé nitroaromatique, par exemple du TNT, du DNT et leurs dérivés. Cette concentration est très forte et s'opposait a priori à l'utilisation d'un micro-organisme pour éliminer ces composés.

De plus, le procédé de l'invention est un procédé non polluant car il génère peu ou pas de métabolites intermédiaires à partir du (des) composé(s) nitroaromatique(s), il ne nécessite pas de produits chimiques polluants, et il utilise un micro-organisme qui est inoffensif.

De plus, le procédé de l'invention est un procédé très économique, car il utilise une souche de micro-organisme qui n'est pas chère, qui est disponible dans le commerce, et qui se développe facilement, même à des températures voisines de 4°C.

De plus, Penicillium a tendance à former des pelotes ("pelets" en anglais), qui peuvent être extraites très facilement d'une solution, par exemple par simple filtration, ce qui facilite les traitements de solutions, tels que des effluents industriels, par exemple en continu.

De nombreux autres avantages et caractéristiques de la présente invention pourront encore se révéler à l'homme de l'art à la lecture des exemples illustratifs et non limitatifs qui suivent, en référence aux figures en annexe.

### Brève description des figures en annexe

- les figures 1A et 1B sont des représentations graphiques illustrant l'effet du glucose sur la minéralisation du TNT par le procédé de la présente invention, le graphique 1A représentant la minéralisation du TNT sans glucose et le graphique 1B la minéralisation du TNT en présence de glucose ;
- les figures 1C et 1D sont des représentations graphiques de cinétiques de formation de nitrites en présence (figure 1D) ou en absence (figure 1C) de glucose ;
- la figure 2 est une représentation graphique de l'effet de la concentration en TNT dans la solution sur la minéralisation de ce dernier par le procédé de la présente invention en fonction du temps en jours ;
- la figure 3 est une représentation graphique de la dégradation de TNT dans une solution selon le procédé de l'invention ; et
- la figure 4 est un schéma illustrant une identification des métabolites extractibles formés lors de la minéralisation du TNT par le procédé de l'invention, par une analyse effectuée sur couche mince de silice couplée à un scanner de radioactivité sur plaques.

### Exemples

### Exemple 1 : préparation d'une biomasse de Penicillium

Le milieu de culture utilisé pour la préparation de la biomasse est constitué de 0,5 g/l de KH₂PO₄, de 0,1 g/l de K₂HO₄, de 30 g/l de glucose, de 10 g/l d'hydrolysat de maïs de la marque de commerce Corn Steep (offert par la Société des Produits du Maïs), de 0,5 g/l de MgSO₄, de 2 g/l de NaNO₃, de 0,5 g/l de Kcl et de 0,02 g/l de FeSO₄.

La souche de Penicillium utilisée, appelée Penicillium sp. LCM par les présents inventeurs, a été déposée sous le numéro I-2081 à la CNCM (Institut Pasteur, France).

Les cultures sont réalisées dans des erlenmeyers et agités durant trois jours à 250 tours par minute à une température de 27°C.

La biomasse formée est ensuite récupérée par filtration.

### Exemple 2 : élimination de composés nitroaromatiques présents dans une solution selon le procédé de la présente invention

### Conditions d'incubation et d'analyse de la biodégradation des composés nitroaromatiques

Les composés nitroaromatiques dans cet exemple sont du trinitrotoluène (TNT), du 2,4-dinitrotoluène, et du 2,6-dinitrotoluène.

Une solution de TNT à 62 g/l dans l'acétone nous a été fournie par la Société Nationale des Poudres et Explosifs (Vert-Le-Petit, France).

Le TNT uniformément marqué au ¹⁴C provient de Chemsyn Science Laboratoires, USA et il présente les caractéristiques suivantes : 21,5 mCi/mmole-100 µCi/ml dans l'eau.

Le 2,4-dinitrotoluène provient de la Société Rhône-Poulenc (France), et le 2,6-dinitrotoluène de la Société Aldrich (catalogue Aldrich).

La dégradation des composés nitroaromatiques est effectuée avec la biomasse fraîche préparée dans l'exemple 1, sur une table à agitation rotative à 250 tours/minute, dans une pièce thermostatée à 27°C.

Le composé nitroaromatique est ajouté à raison de 0,05 ou 0,1 g/l dans 7,5 g de biomasse fraîche remis en suspension dans 50 ml d'eau distillée glucosée à 1,5% (15 g de glucose/litre de solution). La biomasse fraîche est donc à une concentration de 150 g pour 1 litre de solution.

Dans le cadre de l'étude de la minéralisation du composé nitroaromatique, les expériences sont réalisées en présence de traceurs radiomarqués (50 µl).

Le suivi de la dégradation du TNT radiomarqué ou non, ou des dinitrotoluènes 2,4 ou 2,6, est réalisé par Chromatographie Liquide Haute Performance (CLHP) à λ=254 nm sur une colonne de graphite poreux Hypercab (marque de commerce) fournie par la Société Shandon, FRANCE, éluée avec 80% d'acétonitrile, 0,05% d'acide trifluoroacétique et de l'eau.

Le système chromatographique est composé d'un injecteur Waters 717 (marque de commerce), d'une pompe Waters 600E (marque de commerce) (débit 1 ml/min), d'un détecteur UV Waters 486 (marque de commerce) opérant à 220 nm fournis par la Société WATER, FRANCE et d'un détecteur de radioactivité Monitor LB 506 C-1 (marque de commerce) fourni par la Société Berthold, FRANCE.

La radioactivité totale est mesurée par comptage à l'aide d'un capteur à scintillation liquide LKB 1214 Rackbeta (marque de commerce) fournie par la Société Wallac.

La concentration en nitrite est déterminée par la méthode de Griess. Dans des plaques Elisa 96 puits, 50 µl d'échantillon à doser sont mélangés à 50 µl du réactif de Griess (5% sulfanilamide dans HCl 2M+0,5% de N-1-naphtyléthylènediamine dans HCl 2M, pourcentages exprimés en V/V) dans des microplaques.

Après 20 minutes à température ambiante, l'absorbance à 540 nm est mesurée par un lecteur de plaque Elisa fourni par la Société Dynatech.

Les nitrites et nitrates ont également été analysés par CLHP sur une colonne Hypersyl ODS (marque de commerce) fournie par la Société Shandon : 5 mm, 4,6x250 mm) par appariement d'ions : 10% MeOH/PiC A (Waters) 5 mM, à 210 nm. Les temps de rétention sont de 4,9 minutes pour les nitrites et de 6,0 minutes pour les nitrates. Les concentrations sont évaluées par rapport à une courbe d'étalonnage de 0 à 200 µM.

Le TNT est analysé par chromatographie sur couche mince (CCM) sur plaque de silice, en présence de l'éluant acétate d'éthyl (Rf = 0,87). La radioactivité associée aux différentes tâches CCM a été mesurée à l'aide d'un analyseur linéaire automatique de couche mince Tracemaster 20 (marque de commerce) fourni par la Société Berthold.

### Extraction des produits de transformation

Le milieu d'incubation est centrifugé 15 minutes à 10 000 tours/min à 4°C, puis extrait trois fois à l'acétate d'éthyle. La phase organique récupérée est séchée sur MgSO₄. Après filtration, le solvant est éliminé au rotavapor. Une purification sur plaque de silice semi-préparative est réalisée sur support gel de silice. Les différentes fractions de silice chargées en produits de transformation sont récupérées et reprises dans l'acétate d'éthyle. La silice est éliminée par filtration et le filtrat est évaporé et séché. Les fractions ainsi récupérées sont ensuite analysées.

### 1- Effet du glucose sur la minéralisation du TNT par le procédé de l'invention

Les essais ont été réalisés dans des solutions comprenant 100 mg/l de TNT, 150 g/l de biomasse fraîche, et une concentration en glucose en g/l variable. La radioactivité à l'issue de 5 jours a été mesurée dans chaque essai.

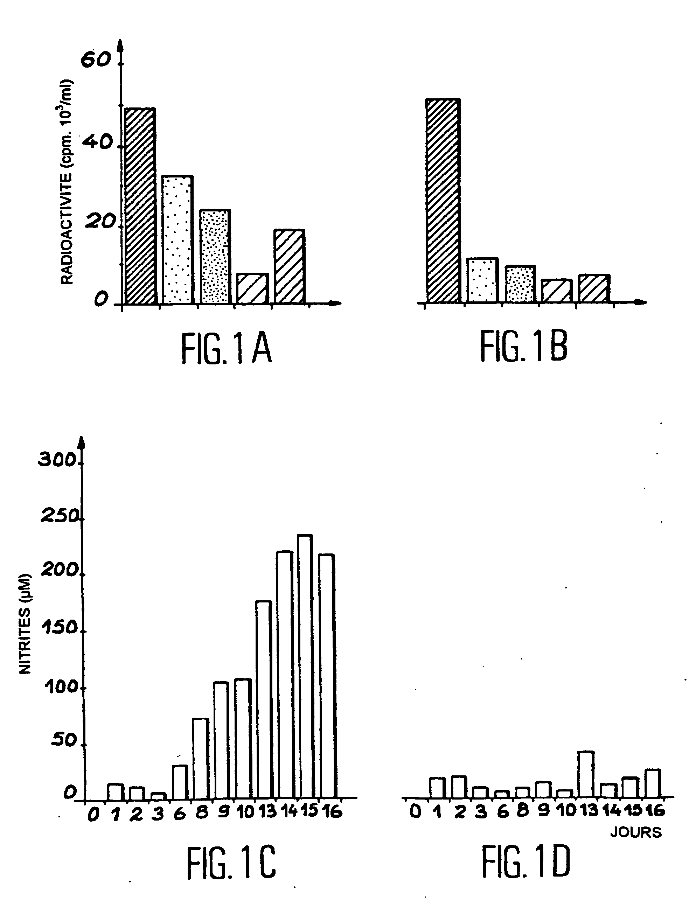

Les figures 1A et 1B en annexe sont des graphiques illustrant les résultats de ces mesures sur lesquels l'ordonnée représente la radioactivité au bout de 16 jours en coups par minute (Cpmx10³)/ml dans la solution.

Sur les figures 1A et 1B, 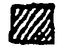 représente la radioactivité initiale dans la solution, 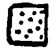 représente la radioactivité totale, 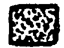 représente la radioactivité totale en présence de Hcl, 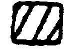 représente la radioactivité associée au surnagent, et 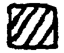 représente la radioactivité associée à la biomasse.

Ces figures 1A et 1B montrent que le glucose favorise la minéralisation du TNT : 46.7% de minéralisation en absence de glucose contre 66,7% en présence de glucose en 16 jours d'incubation dans les conditions précitées. La radioactivité initialement associée au TNT est assimilée de manière plus importante en milieu non enrichie en source de carbone. Le glucose favorise donc la minéralisation du TNT.

Lors de ces expériences, la concentration en nitrite a été mesuree. La présence de glucose dans le milieu d'incubation inhibe totalement la formation de NO₂⁻. Par contre, en absence de glucose, on atteint des concentrations en nitrites voisines de 230 µM correspondant à 17,4% des nitrites susceptibles de se former à partir du TNT par dénitrification.

Il semble donc que la dénitrification qui se déroule dans des conditions oxydatives, c'est-à-dire en l'absence d'équivalents réducteurs, c'est-à-dire de glucose, n'est pas forcément propice à la minéralisation qui semble être favorisée dans des conditions réductrices, c'est-à-dire en présence de glucose.

Des mesures de cinétique de la formation de nitrites en présence ou en absence de glucose ont été réalisées sur les solutions précédemment décrites.

Les résultats de ces mesures ont été reportés sur les figures 1C et 1D en annexe : la figure 1C illustrant la cinétique de formation des nitriques en µM dans la solution en absence de glucose en fonction du temps en jours, et la figure 1D illustrant la cinétique de formation des nitrites en µM dans la solution en présence de glucose en fonction de temps en jours.

D'après ces résultats, il semble donc que la dénitrification, qui se déroule dans des conditions oxydatives, c'est-à-dire en l'absence de glucose, n'est pas forcément propice à la minéralisation qui semble être favorisée dans les conditions réductrices, c'est-à-dire en présence de glucose.

A partir du cinquième jour d'incubation, la minéralisation de TNT par Penicillium sp. LCM se stabilise. Cette stabilisation est brutale et intervient à un moment où la biomasse semble peu détériorée. Un déficit en nutriments, une toxicité du TNT ou de ses métabolites vis-à-vis du micro-organisme, ou encore une perte de viabilité de la souche peut conduire à une diminution de l'activité catalytique et expliquer cette inhibition.

### 2- Effet de la concentration initiale en TNT sur la minéralisation du TNT par le procédé de l'invention

La solubilité maximale du TNT dans l'eau à température ambiante est de 100 mg/l (saturation à température ambiante). Afin de vérifier si cette concentration n'est pas trop élevée pour permettre une minéralisation totale du TNT ou de ses dérivés les 2,4 et 2,6-DNT, nous avons réalisé des incubations à 50 mg/l et à 100 mg/l de TNT. Les essais ont été réalisés à 27°C, sous agitation à 150 rpm, en présence de 150 g/l de biomasse fraîche de Penicillium et de 15 g/l de glucose.

Les résultats de ces mesures ont été reportés dans le tableau II suivant.

**Tableau II**

| temps en jours | | 0 | 1 | 2 | 3 | 4 | 7 |
|---|---|---|---|---|---|---|---|
| solution à 50 mg TNT/l | Cpm* 10³/ml | 48 | 41 | 44 | 19 | 14 | 15 |
| solution à 100 mg TNT/l | Cpm* 10³/ml | 46 | 47 | 44 | 29 | 16 | 15 |
| Cpm*= coups par minute - déterminé par une mesure de la radioactivité. | | | | | | | |

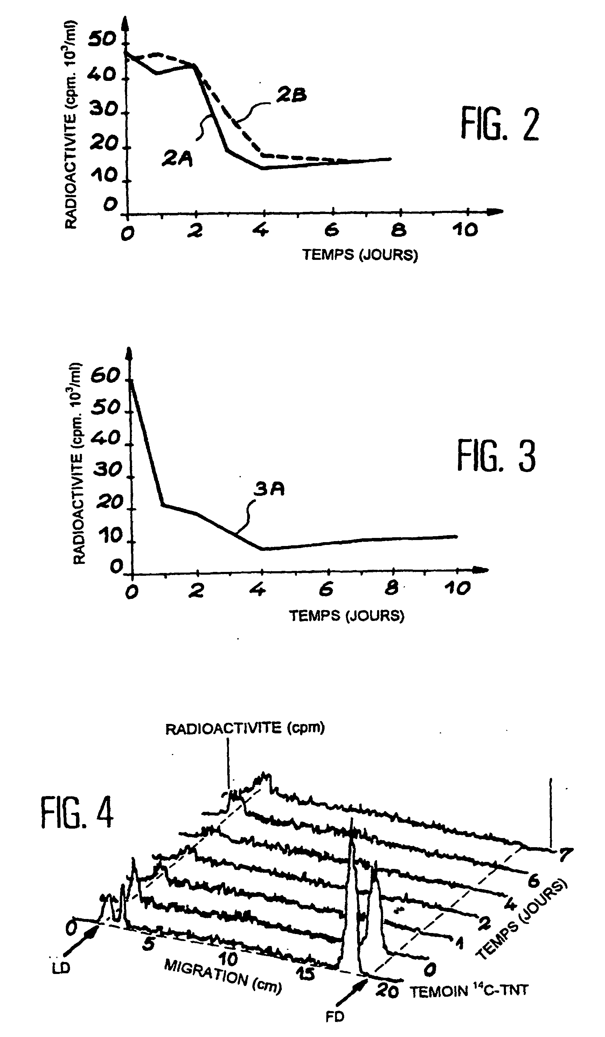

La figure 2 en annexe est un graphique réalisé à partir de ces mesures sur lequel l'abscisse représente le temps en jours et l'ordonnée la mesure de la radioactivité en coups par minute (Cpm)x10³/ml. Ces résultats montrent qu'à 50 mg de TNT/l (courbe référencée 2A sur la figure 2) et qu'à 100 mg de TNT/l (courbe référencée 2B sur la figure 2), le pourcentage de minéralisation du TNT par Penicillium est identique après 7 jours d'incubation et se stabilise à environ 70%.

### 3- Minéralisation du TNT

Des essais ont été réalisés comme précédemment, avec une solution comprenant 100 mg/l de TNT en présence de TNT radiomarquée sur tous les atomes de carbone du cycle. Cette solution comprenait en outre 150 g/l de biomasse fraîche de Penicillium tel que dans l'exemple 1 précédent, et 15 g/l de glucose. La mise en contact a été réalisée à une température de 27°C sous agitation à 150 rpm.

Le tableau III suivant regroupe les mesures effectuées pour ces essais.

**Tableau III**

| temps en jours | 0 | 1 | 2 | 4 | 6 | 7 | 8 | 10 |
|---|---|---|---|---|---|---|---|---|
| 100 mg/l de TNT (Cpm*x10³) | 52 | 21 | 19 | 7 | 8 | 9 | 10 | 10 |
| Cpm* : voir tableau II | | | | | | | | |

La figure 3 en annexe est un graphique réalisé à partir de ces mesures sur lequel l'abscisse représente le temps en jours et l'ordonnée la mesure de la radioactivité en coups par minute (Cpm).

Ces résultats montrent une minéralisation de 79% du TNT en 10 jours.

### 4- Identification des métabolites extractibles formés lors de la minéralisation du TNT par le procédé de l'invention

Une chromatographie liquide haute performance nous a permis de montrer une disparition totale du TNT en 24 heures, sans apparition de métabolites connus tels que du dinitrotoluène, de l'amino-dinitrotoluène, du diamino-nitrotoluène dérivés du TNT à partir d'une solution de 100 mg/l de TNT. Cette observation a été confirmée par l'analyse des extraits (acétate d'éthyle) du milieu d'incubation par chromatographie sur couche mince de silice couplée à un scanner de radioactivité sur plaques. La figure 4 en annexe est un schéma illustrant cette analyse. En effet, dans le solvant CCM utilisé, la radioactivité résiduelle après 24 heures se retrouve totalement associée au dépôt. Elle ne représente plus que 25 à 30% de la radioactivité initiale, et ne correspond ni au 2,4- ni au 2,6-DNT qui ont dans ce système des Rf de 0,8 environ.

Compte tenu du pourcentage important de minéralisation du TNT, supérieur à 70% la radioactivité résiduelle dans les surnageants est faible et limite la détection de métabolites éventuels. Nous avons donc réalisé des expériences préparatives sur 1 litre de TNT à une concentration de 100 mg/l afin d'extraire les éventuels composés résiduels en quantité suffisante pour les caractériser. A la fin de la réaction et malgré plusieurs extractions, le rendement global n'est que de 20% environ. Nous avons isolé un composé majoritaire (7%) de poids moléculaire P.M. 182. Ce produit non visible sur la plaque radioactive (Rf=0,4) précédemment décrite est présent à une concentration trop faible pour être détecté par le scanner. Bien que ce poids moléculaire soit identique à celui des DNT, le produit isolé n'est pas du DNT car les Rf en CCM sont différents.

### 5- Conclusion

Le champignon filamenteux de Penicillium sp. LCM permet donc une dégradation complète du TNT et de ses dérivés tels que les 2,4 et 2,6-DNT en solution à 100 mg/l en moins de 24 heures, associée à une minéralisation de plus de 70% en 5 jours. Un tel pourcentage de minéralisation à 100 mg/l de TNT et de ses dérivés tels que les 2,4 et 2,6-DNT n'a, à notre connaissance, jamais été rapporté précédemment dans la littérature. L'étude de l'influence de plusieurs facteurs a permis de montrer que l'absence de glucose inhibe légèrement la minéralisation du TNT, mais favorise la dénitrification de ce dernier, que la température et le pH ont un effet sur la minéralisation du TNT et de ses dérivés tels que les 2,4 et 2,6-DNT.

### Exemple 3 : élimination de composés nitroaromatiques présents dans un sol selon le procédé de la présente invention

Un sol contenant du TNT pourra être inondé d'une solution aqueuse contenant un tampon phosphate 50 mM et de l'amidon comme source de carbone.

Une biomasse de Penicillium peut être préparée comme dans l'exemple 1, puis répartie sur le sol.

Dans un autre essai, la solution destinée à inonder le sol peut contenir à la fois le tampon phosphate 50 mM, l'amidon, et la biomasse.

## Revendications

1. Procédé microbiologique d'élimination d'au moins un composé nitro-aromatique présent dans une solution ou dans un sol, **caractérisé en ce qu'**il comprend une étape de mise en contact de ladite solution ou dudit sol avec une biomasse d'une souche Penicillium dans des conditions adéquates pour une minéralisation dudit composé nitroaromatique par la souche Penicillium, en présence d'une source de carbone pour la souche de Penicillium dans lequel la souche de Penicillium est la souche Penicillium sp. LCM déposée sous le numéro I-2081 à la CNCM tenue par l'Institut Pasteur en France.

2. Procédé selon la revendication 1 d'élimination d'au moins un composé nitroaromatique présent dans un sol, comprenant en outre une étape d'inondation audit sol avec une solution aqueuse, de manière à former une solution de composé nitroaromatique.

3. Procédé selon la revendication 1 d'élimination d'au moins un composé nitroaromatique présent dans une solution, dans lequel la mise en contact est réalisée soit par mélange de la biomasse et de la solution du composé nitroaromatique, soit par passage de ladite solution à travers la biomasse, ladite biomasse étant retenue, dans ou sur, un support de manière à pouvoir être traversée par ladite solution, pour permettre la minéralisation du composé nitroaromatique qu'elle contient.

4. Procédé selon la revendication 1 ou 3 d'élimination d'au moins un composé nitroaromatique présent dans une solution, dans lequel la solution de composé nitroaromatique est une solution aqueuse de ce composé.

5. Procédé selon la revendication 1, 3 ou 4, dans lequel la solution de composé nitroaromatique est une solution de laboratoire, un effluent industriel ou une eau de ruissellement.

6. Procédé selon l'une quelconque des revendications 1 à 5, dans lequel l'étape de mise en contact est effectuée à une température permissive pour le métabolisme de la souche de Penicillium.

7. Procédé selon la revendication 1, dans lequel la source de carbone est choisie dans le groupe comprenant du glucose, des polymères de glucose, de la mélasse et des bydrolysats de maïs.

8. Procédé selon l'une quelconque des revendications 1 à 7, dans lequel la mise en contact est effectuée en présence de glucose à une concentration de 0,5 à 50 g de glucose/l de ladite solution.

9. procédé selon l'une quelconque des revendications 1 à 8, dans lequel la biomasse de Penicillium est mise en contact avec la solution de composé nitroaromatique à une concentration de 50 à 800 g en poids frais de biomasse par litre de solution dudit composé.

10. Procédé selon l'une quelconque des revendications 1 à 9, dans lequel le, au moins un, composé nitroaromatique est un composé comprenant au moins un cycle aromatique comportant au moins un groupe nitro, et éventuellement au moins une fonction choisie dans le groupe comprenant -OH, -COOH, un halogène, -NH₂, un ose cyclique ou linéaire, un alkyle linéaire ou ramifié comprenant de 1 à 12 atomes de carbone ou un aryle, non substitués ou substitués, par au moins une fonction choisie dans le groupe comprenant -OH, -COOH, un halogène, -NH₂, -OH.

11. Procédé selon l'une quelconque des revendications 1 à 9, dans lequel le, au moins un, composé nitroaromatique est un composé choisi parmi du nitrotoluène, du dinitrotoluène, du trinitrotoluène, et leurs dérivés, ou un mélange de ces composés.

12. Procédé selon l'une quelconque des revendications 1 à 11, comprenant en outre, avant l'étape de mise en contact, une étape de neutralisation du pH de la solution de composé nitroaromatique ou du sol de manière à ce que la mise en contact avec la souche de Penicillium puisse être effectuée à un pH de 4,5 à 6,5.

13. Souche de type Penicillium sp. déposée sous le numéro I-2081 à la CNCM tenue par l'Institut Pasteur en France.

## Patentansprüche

1. Mikrobiologisches Verfahren zur Eliminierung mindestens einer nitroaromatischen Verbindung, die in einer Lösung oder in einem Sol enthalten ist, **dadurch gekennzeichnet, dass** es eine Stufe umfasst, in der man die Lösung oder das Sol mit einer Biomasse eines Penicillin-Stammes unter Bedingungen, die geeignet sind für eine Mineralisierung der nitroaromatischen Verbindung durch den Penicillin-Stamm, in Gegenwart einer Kohlenstoffquelle für den Penicillin-Stamm in Kontakt bringt, wobei es sich bei dem Penicillin-Stamm um den Stamm Penicillium sp. LCM handelt, der hinterlegt ist unter der Nr. I-2081 bei der Nationalen französischen Sammlung von Mikroorganismenkulturen (CNCM) im Pasteur-Institut in Frankreich.

2. Verfahren nach Anspruch 1 zur Eliminierung mindestens einer nitroaromatischen Verbindung, die in einem Sol enthalten ist, das außerdem eine Stufe umfasst, in der das Sol mit einer wässrigen Lösung so überflutet wird, dass sich eine Lösung der nitroaromatischen Verbindung bildet.

3. Verfahren nach Anspruch 1 zur Eliminierung mindestens einer nitroaromatischen Verbindung, die in einer Lösung enthalten ist, bei dem das Inkontaktbringen durchgeführt wird entweder durch Vermischen der Biomasse mit der Lösung der nitroaromatischen Verbindung oder durch Hindurchleiten der Lösung durch die Biomasse, wobei die Biomasse in oder auf einem Träger in der Weise zurückgehalten wird, dass sie von der Lösung durchströmt werden kann, um die Mineralisierung der nitroaromatischen Verbindung, die sie enthält, zu erlauben.

4. Verfahren nach Anspruch 1 oder 3 zur Eliminierung mindestens einer nitroaromatischen Verbindung, die in einer Lösung enthalten ist, bei dem die Lösung der nitroaromatischen Verbindung eine wässrige Lösung dieser Verbindung ist.

5. Verfahren nach Anspruch 1, 3 oder 4, bei dem die Lösung der nitroaromatischen Verbindung eine Labor-Lösung, ein industrielles Abwasser oder ein Oberflächenwasser ist.

6. Verfahren nach einem der Ansprüche 1 bis 5, bei dem die Stufe des Inkontaktbringens bei einer Temperatur durchgeführt wird, die den Stoffwechsel des Penicillin-Stammes ermöglicht.

7. Verfahren nach Anspruch 1, bei dem die Kohlenstoffquelle ausgewählt wird aus der Gruppe, die umfasst Glucose, Glucosepolymere, Melasse und Mais-Hydrolysate.

8. Verfahren nach einem der Ansprüche 1 bis 7, bei dem das Inkontaktbringen durchgeführt wird in Gegenwart von Glucose in einer Konzentration von 0,5 bis 50 g Glucose/l Lösung.

9. Verfahren nach einem der Ansprüche 1 bis 8, bei dem die Penicillin-Biomasse mit der Lösung der nitroaromatischen Verbindung in einer Konzentration von 50 bis 800 g Frischgewicht der Biomasse pro Liter Lösung der genannten Verbindung in Kontakt gebracht wird.

10. Verfahren nach einem der Ansprüche 1 bis 9, bei dem die oder mindestens eine nitroaromatische Verbindung eine Verbindung darstellt, die enthält mindestens einen aromatischen Ring, der aufweist mindestens eine Nitrogruppe, und gegebenenfalls mindestens eine Funktion, ausgewählt aus der Gruppe, die umfasst -OH, -COOH, ein Halogen, -NH₂, eine cyclische oder lineare Ose, ein lineares oder verzweigtes Alkyl mit 1 bis 12 Kohlenstoffatomen oder ein Aryl, die unsubstituiert oder substituiert sind durch mindestens eine Funktion, ausgewählt aus der Gruppe, die umfasst -OH, -COOH, ein Halogen, -NH₂, -OH.

11. Verfahren nach einem der Ansprüche 1 bis 9, bei dem die oder mindestens eine nitroaromatische Verbindung eine Verbindung darstellt, die ausgewählt wird aus der Gruppe Nitrotoluol, Dinitrotoluol, Trinitrotoluol und Derivaten davon oder einer Mischung dieser Verbindungen.

12. Verfahren nach einem der Ansprüche 1 bis 11, das außerdem vor der Stufe des Inkontaktbringens eine Stufe der Neutralisation des pH-Wertes der Lösung der nitroaromatischen Verbindung oder des Sols umfasst, sodass das Inkontaktbringen mit dem Penicillin-Stamm bei einem pH-Wert von 4,5 bis 6,5 durchgeführt werden kann.

13. Stamm vom Typ Penicillium sp., der unter der Nr. I-2081 bei der Nationalen Sammlung von Mikroorganismenkulturen beim Pasteur-Institut in Frankreich hinterlegt ist.

## Claims

1. Microbiological method for eliminating at least one nitroaromatic compound present in a solution or in a soil, **characterized in that** it comprises a step consisting of placing said solution or said soil in contact with a biomass of a Penicillium strain under suitable conditions for mineralisation of said nitroaromatic compound by the Penicillium strain, wherein the Penicillium strain is the Penicillium sp. LCM strain registered under number I-2081 at the CNCM kept by Institut Pasteur in France.

2. Method according to claim 1 for eliminating at least one nitroaromatic compound present in a soil, also comprising a step consisting of the inundation of said soil with an aqueous solution, so as to form a nitroaromatic compound solution.

3. Method according to claim 1 for eliminating at least one nitroaromatic compound present in a solution, wherein the contact is carried out either by mixing the biomass and the nitroaromatic compound solution or by passing said solution through the biomass, said biomass being retained in, or on, a substrate such that said solution is able to pass through, to enable the mineralisation of the nitroaromatic compound it contains.

4. Method according to claim 1 or 3 for eliminating at least one nitroaromatic compound present in a solution, wherein the nitroaromatic compound solution is an aqueous solution of said compound.

5. Method according to claim 1, 3 or 4, wherein the nitroaromatic compound solution is a laboratory solution, an industrial effluent or surface water.

6. Method according to any of claims 1 to 5, wherein the contact step is carried out at a permissive temperature for the Penicillium strain metabolism.

7. Method according to claim 1, wherein the source of carbon is selected from the group comprising glucose, glucose polymers, molasses and corn hydrolysates.

8. Method according to any of claims 1 to 7, wherein the contact is carried out in the presence of glucose at a concentration of 0.5 to 50 g of glucose/l of said solution.

9. Method according to any of claims 1 to 8, wherein the Penicillium biomass is placed in contact with the nitroaromatic compound solution at a concentration of 50 to 800 g in fresh biomass weight per litre of solution of said compound.

10. Method according to any of claims 1 to 9, wherein the, at least one, nitroaromatic compound is a compound comprising at least one aromatic cycle comprising at least one nitro group and, if applicable, at least one function selected in the group comprising -OH, -COOH, a halogen, -NH₂, a cyclic or linear ose, a linear or ramified alkyl comprising 1 to 12 carbon atoms or an aryl, not substituted or substituted, by at least one function selected in the group comprising -OH, -COOH, a halogen, -NH₂, -OH.

11. Method according to any of claims 1 to 9, wherein the, at least one, nitroaromatic compound is a compound selected from nitrotoluene, dinitrotoluene, trinitrotoluene and their derivatives or a mixture of these compounds.

12. Method according to any of claims 1 to 11 also comprising, before the contact step, a step consisting of neutralising the pH of the nitroaromatic compound solution or the soil such that the contact with the biomass, for example a Penicillium strain, can be performed at a pH of 4.5 to 6.5.

13. Penicillium sp. type strain registered under number 1-2081 at the CNCM kept by Institut Pasteur in France.
